# FASCICULE DE BREVET EUROPEEN

(11) **EP 0 712 743 B1**
(45) Date de publication et mention de la délivrance du brevet: **29.03.2000**
(21) Numéro de dépôt: 95402277.8
(22) Date de dépôt: 11.10.1995
(51) Int. Cl.: B60G 21/055

(54) **Dispositif anti-dévers pour essieu de véhicule automobile**
Antirollvorrichtung für Kraftfahrzeugachse
Anti-roll device for motor vehicle axle

(30) Priorité: 15.11.1994 FR 9413660
(43) Date de publication de la demande: 22.05.1996
(73) Titulaire: AUTOMOBILES PEUGEOT, 75116 Paris (FR); AUTOMOBILES CITROEN, 92200 Neuilly-sur-Seine (FR)
(72) Inventeur: Agostini, Guy, F-92360 Meudon la Foret (FR)
(74) Mandataire: Polus, Camille

(56) Documents cités:
- EP-A- 0 410 676
- DE-A- 1 430 889
- DE-A- 1 530 522
- DE-A- 2 443 170
- DE-A- 2 842 429
- DE-C- 967 572
- GB-A- 2 117 718
- US-A- 2 179 016
- US-A- 5 062 656

## Description

La présente invention concerne un dispositif anti-dévers pour essieu de véhicule automobile.

On connaît déjà dans l'état de la technique un dispositif anti-dévers du type comportant une barre de torsion transversale portée par le corps du véhicule, chaque extrémité de cette barre étant reliée à un organe mobile de suspension de l'une des deux roues opposées de l'essieu.

Ce type de dispositif oppose généralement aux effets de dévers une raideur qui est constante, indépendante du dévers et donc de la différence entre les débattements verticaux des roues par rapport au corps du véhicule.

Un dispositif anti-dévers du type défini dans le préambule de la revendication 1 est connu du document DE-C-967 572. Le document DE-A- 1 530 522 décrit un dispositif anti-dévers à une seule barre de torsion, cette barre étant reliée à des moyens d'articulation de raideur progressive.

L'invention a notamment pour but de proposer un dispositif anti-dévers perfectionné dont la raideur soit croissante avec l'amplitude du dévers, de manière à pouvoir optimiser cette raideur dans différentes plages d'amplitudes des débattements des roues, et cela sans utiliser des dispositifs correcteurs connus comportant des moyens hydrauliques et/ou électriques.

A cet effet l'invention a pour objet un dispositif anti-dévers pour essieu de véhicule automobile, du type comportant une barre de torsion transversale supplémentaire portée par le corps du véhicule, caractérisé en ce que chaque extrémité de la barre supplémentaire est reliée à l'organe mobile de suspension correspondant par l'intermédiaire de moyens d'articulation présentant une raideur qui croît progressivement avec l'amplitude du dévers du corps du véhicule, au moins à partir d'un seuil prédéterminé d'amplitude de ce dévers.

Suivant des caractéristiques de différents modes de réalisation de l'invention:
- chaque barre est portée par deux paliers élastiques comportant chacun une armature métallique portée par le corps du véhicule, commune avec un palier élastique de l'autre barre, les deux barres étant disposées sensiblement l'une au dessus de l'autre ;
- les extrémités des barres sont reliées à l'organe de suspension par des biellettes verticales, chaque biellette associée à la barre supplémentaire étant reliée à l'organe de suspension correspondant par l'intermédiaire des moyens de raideur progressive ;
- les moyens de raideur progressive comprennent deux butées axiales mobiles portées par la biellette correspondante et une butée axiale fixe élastique portée par l'organe de suspension correspondant, formant un palier de coulissement de la biellette, interposée entre les butées mobiles de manière qu'il existe un jeu entre chaque butée mobile et la butée fixe permettant une course morte axiale d'oscillation des butées mobiles de part et d'autre de la butée fixe ;
- la butée fixe est délimitée par un organe élastique de forme générale annulaire, maintenu sur le bord d'un orifice traversé par la biellette, ménagé dans une patte solidaire de l'organe de suspension, et les butées mobiles sont délimitées par des coupelles solidaires de la biellette ;
- les deux barres sont pliées de manière que leurs extrémités s'étendent de façon générale dans une direction sensiblement longitudinale du véhicule ;
- les extrémités d'une première barre sont reliées à l'organe de suspension par des biellettes verticales, les extrémités de la barre supplémentaire ou seconde barre étant reliées aux extrémités de la première barre par l'intermédiaire des moyens de raideur progressive;
- les moyens de raideur progressive comprennent une armature métallique comportant deux bagues solidaires l'un de l'autre, entourant chacune l'une des deux barres, un manchon en élastomère, ajouré par des alvéoles axiaux, étant interposé entre chaque bague et la barre correspondante ;
- les bagues ont une forme générale cylindrique et sont soudées entre elles le long de génératrices en contact entre elles, de manière que leurs axes soient sensiblement parallèles ;
- les barres sont pliées de manière que leurs extrémités s'étendent de façon générale dans une direction sensiblement longitudinale du véhicule, et ces extrémités sont par ailleurs coudées de manière à délimiter chacune un tronçon sensiblement transversal, les bagues entourant ces tronçons ;
- le manchon en élastomère entouré par l'une des deux bagues est adhérisé sur une douille axiale centrale de fixation des moyens de raideur progressive sur la seconde barre, cette douille étant enfilée et fixée sur le tronçon transversal délimitant la partie terminale de l'extrémité de la seconde barre, en étant serrée entre un épaulement de ce tronçon et un écrou vissé sur l'extrémité libre filetée du tronçon.

L'invention sera mieux comprise à la lecture de la description qui va suivre donnée uniquement à titre d'exemple, pour la compréhension de laquelle on se réfèrera aux dessins annexés dans lesquels :
- la figure 1 est une vue en perspective d'un dispositif anti-dévers selon un premier mode de réalisation de l'invention ;
- la figure 2 est une vue de détail, suivant la flèche 2 de la figure 1, de la biellette reliant une extrémité de la barre de torsion supplémentaire à l'organe de suspension de la roue correspondante ;
- la figure 3 est une vue partielle en perspective d'un dispositif anti-dévers selon un second mode de réalisation de l'invention ;
- la figure 4 est une vue de détail, suivant la flèche 4 de la figure 3, des moyens de raideur progressive du dispositif anti-dévers représenté à la figure 3;
- la figure 5 est une vue en coupe suivant la ligne 5-5 de la figure 4 ;
- la figure 6 est une vue en coupe suivant la ligne 6-6 de la figure 5.

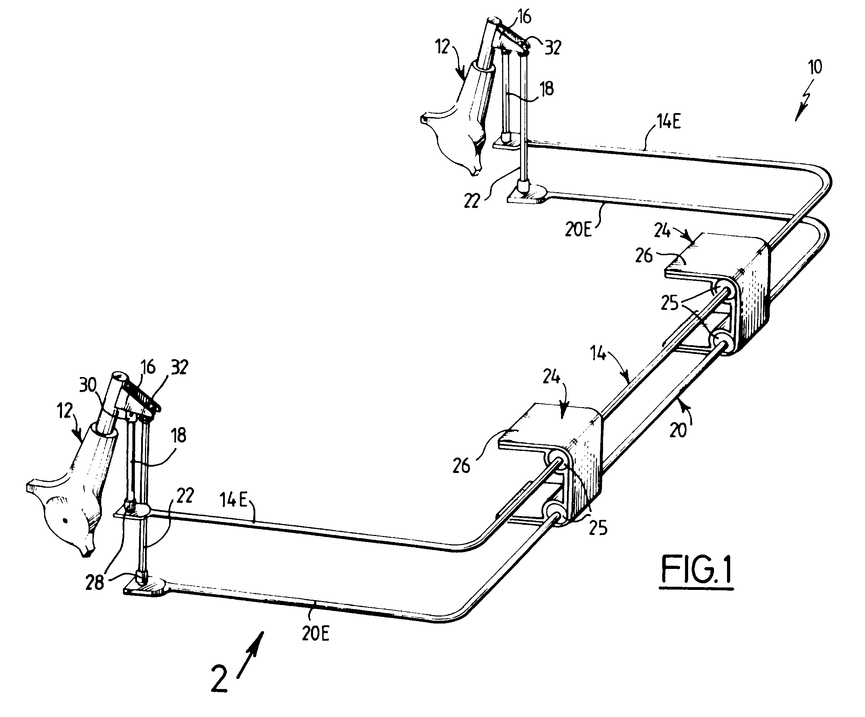

On a représenté sur la figure 1 un dispositif anti-dévers 10 selon l'invention destiné à être monté sur un essieu de véhicule automobile, par exemple un essieu avant.

Dans l'exemple illustré sur cette figure, l'essieu avant comporte un dispositif de suspension du type "PSEUDO-MAC PHERSON" associé à chaque roue de l'essieu, dont on a uniquement représenté sur la figure 1 un organe de suspension mobile 12, de type connu.

De façon classique, le dispositif anti-dévers 10 comporte une barre de torsion 14 transversale au véhicule, dont les extrémités 14E sont reliées de façon connue en soi à des pattes 16 solidaires des organes de suspension 12 correspondants par des biellettes 18 sensiblement verticales.

Le dispositif anti-dévers 10 comporte également une barre de torsion transversale supplémentaire 20 dont les extrémités 20E sont reliées aux pattes 16 correspondantes par des biellettes 22 sensiblement verticales.

Les barres 14,20 sont pliées de manière que leurs extrémités 14E,20E s'étendent de façon générale dans une direction sensiblement longitudinale du véhicule.

Chaque barre 14,20 est portée par deux paliers élastiques 24, comportant chacun un manchon en élastomère 25 porté par une armature métallique 26 commune avec un palier élastique 24 de l'autre barre 20,14, la barre supplémentaire 20 étant disposée sensiblement en dessous de l'autre barre 14.

De préférence, comme cela est illustré sur la figure 1, chaque barre est portée par deux paliers élastiques 24 dont les armatures 26 sont fixées de façon connue en soi sous le corps du véhicule, par exemple sur un berceau portant l'essieu avant du véhicule.

Les extrémités inférieures des biellettes 18,22 sont reliées aux extrémités correspondantes des barres 14,20 par des articulations rotulantes élastiques 28 de type connu. De même, les extrémités supérieures des biellettes 18 associées à la barre supérieure 14 sont reliées aux pattes 16 correspondantes par des articulations rotulantes élastiques 30 de type connu.

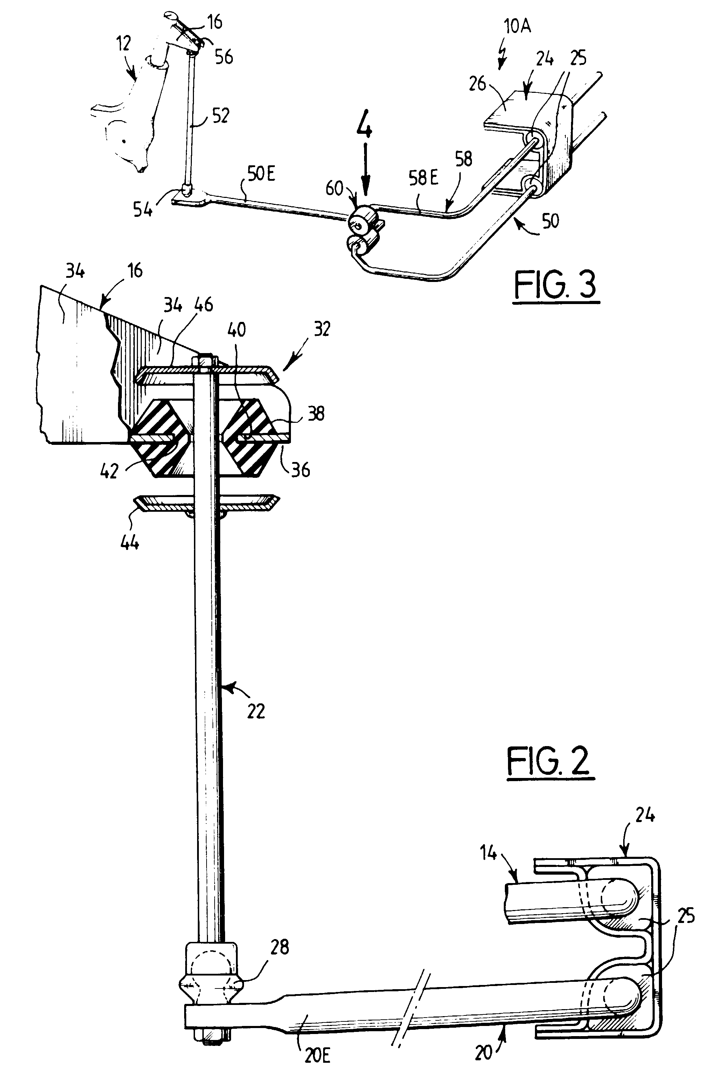

Les extrémités supérieures des biellettes 22 associées à la barre supplémentaire inférieure 20 sont reliées aux pattes 16 par l'intermédiaire de moyens d'articulation 32, représentés plus en détail à la figure 2, dont la raideur est progressive en fonction de l'amplitude du dévers du corps du véhicule, donc de la différence entre les débattements verticaux des roues, à partir d'un seuil d'amplitude prédéterminé de ce dévers.

En se référant à la figure 2, on voit qu'une patte 16 comporte deux ailes 34 sensiblement verticales reliées entre elles par une âme 36 sensiblement horizontale.

Les moyens 32 de raideur progressive comprennent une butée axiale fixe délimitée par un organe élastique 38, de forme générale annulaire, maintenu, au moyen d'une gorge radiale périphérique 40, sur le bord d'un orifice 42 ménagé dans l'âme 36. La butée fixe 38, de préférence réalisée en deux pièces pour féciliter son montage, est traversée par l'extrémité supérieure de la biellette 22, et forme un palier de coulissement pour cette biellette 22.

Les moyens de raideur progressive 32 comportent également deux butées axiales mobiles délimitées par des coupelles 44,46 fixées de façon connue en soi, en leur centre, sur l'extrémité supérieure de la biellette 22.

La butée fixe 38 est interposée entre les butées mobiles 44,46 de manière qu'il existe un jeu entre chaque butée mobile et la butée fixe permettant une course morte axiale d'oscillation des butées mobiles de part et d'autre de la butée fixe.

Lorsque le dispositif anti-dévers 10 est au repos, c'est-à-dire lorsque le véhicule n'est soumis à aucun dévers, les coupelles supérieure 46 gauche et droite associées respectivement aux deux roues de l'essieu reposent chacune sur la butée fixe 38 correspondante, du fait du poids de la biellette 22.

Le fonctionnement du dispositif anti-dévers 10 illustré sur les figures 1 et 2 est très simple.

Lorsque les amplitudes du dévers au droit de l'essieu sont faibles, les coupelles 44,46 se déplacent suivant leur course morte sans coopérer avec la butée élastique fixe 38. De ce fait, seule la raideur de la barre supérieure 14 est sollicitée pour s'opposer aux effets de dévers subis par l'essieu.

Lorsque l'amplitude du dévers augmente, la coupelle inférieure gauche ou droite 44 vient en contact contre la butée fixe élastique 38 associée, la coupelle supérieure 46 située du côté opposé restant en appui sur la butée fixe 38 associée. Ces deux butées se compriment, ajoutant progressivement à la raideur de la barre supérieure 14 la raideur de la seconde barre 20 pour s'opposer aux effets de dévers.

On comprend donc que la course morte des coupelles 44,46 détermine un palier d'amplitude du dévers à partir duquel la raideur des moyens d'articulation 32 devient progressive.

Lorsque l'amplitude du dévers continue d'augmenter, les deux butées fixes 38 atteignent leur seuil de déformation élastique, et la raideur opposée aux effets de dévers, atteint alors un maximum correspondant à la somme des raideurs des deux barres 14 et 20.

Le dispositif anti-dévers 10 décrit ci-dessus permet donc d'opposer une raideur augmentant progressivement et par palier aux effets de dévers subis par l'essieu, de manière que la raideur du dispositif anti-dévers soit adaptée de façon optimale à l'amplitude de dévers.

On a représenté aux figures 3 à 6 un dispositif anti-dévers 10A selon un second mode de réalisation de l'invention, pour un essieu similaire à celui décrit précédemment.

Sur ces figures, les éléments analogues à ceux des figures 1 et 2 sont désignés par des références identiques.

Dans ce cas, le dispositif anti-dévers 10A comporte une barre de torsion transversale inférieure 50 dont les extrémités 50E sont reliées de façon classique aux pattes 16 correspondantes par des biellettes articulées 52 sensiblement verticales. Les extrémités d'articulation inférieure et supérieure de chaque biellette 52 sont munies d'articulations élastiques rotulantes classiques 54,56.

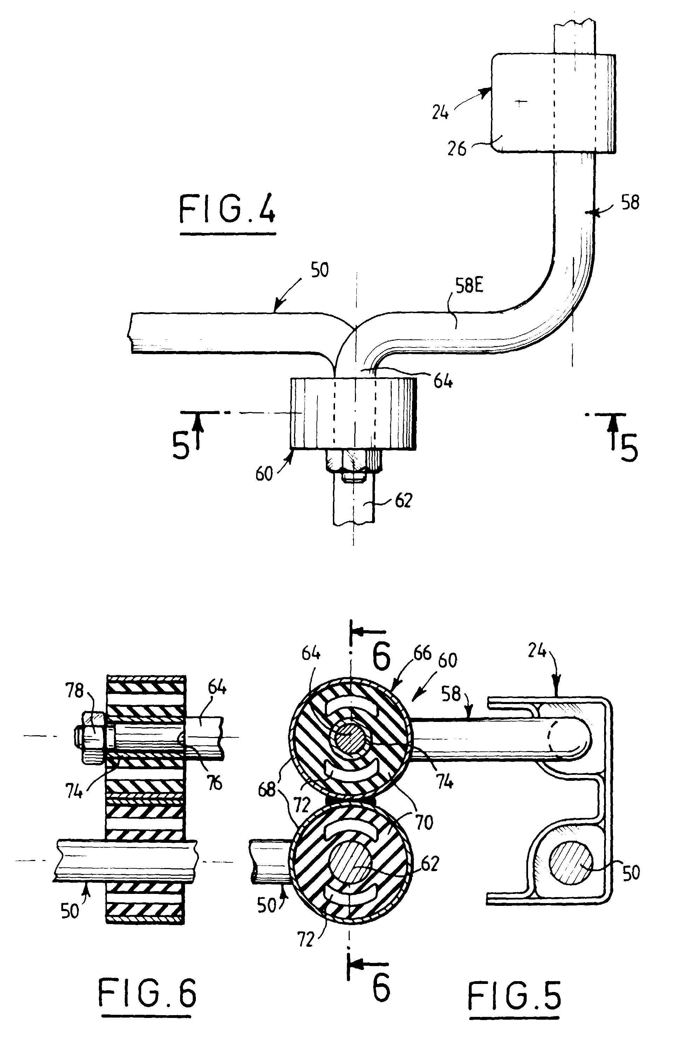

Le dispositif anti-dévers 10A comporte également une barre de torsion transversale supplémentaire 58, disposée sensiblement au dessus de la précédente. Les extrémités 58E de la barre supplémentaire 58 sont reliées aux extrémités 50E de la barre inférieure 50 par l'intermédiaire de moyens d'articulation 60 de raideur progressive, représentés plus en détail aux figures 4 à 6.

Les barres inférieure 50 et supérieure 58 sont reliées au corps du véhicule par des paliers élastiques 24 analogues à ceux décrits précédemment.

Les extrémités 50E,58E des barres 50,58 sont pliées de manière à s'étendre de façon générale dans une direction sensiblement longitudinale. Par ailleurs, ces extrémités 50E,58E sont coudées de manière à délimiter chacune un tronçon 62,64 sensiblement transversal. Les moyens de raideur progressive 60 relient les tronçons transversaux 62,64 des deux barres, ces tronçons étant disposés sensiblement à l'aplomb l'un de l'autre (voir figure 4).

En se référant aux figures 5 et 6, on voit que les moyens de raideur progressive 60 comprennent une armature métallique 66 comportant deux bagues 68 de forme générale cylindrique, soudées entre elles le long de génératrices en contact entre elles, de manière que leurs axes soient sensiblement parallèles.

Un manchon en élastomère 70, ajouré par des alvéoles axiaux 72, est interposé entre chaque bague 68 et la barre correspondante.

Les bagues 68 entourent les tronçons sensiblement transversaux 62,64 des barres 50,58, si bien que les axes de ces bagues sont sensiblement parallèles à la direction générale transversale des barres 50,58, ce qui assure une bonne efficacité des moyens de raideur progressive 60.

Le manchon en élastomère 70, contenu dans la bague supérieure 68, est adhérisé sur une douille axiale centrale 74 de fixation des moyens de raideur progressive 60 sur la barre supérieure 58.

En se référant à la figure 6, on voit que la douille 74 est enfilée et fixée sur le tronçon transversal 64 délimitant la partie terminale de l'extrémité 58E de la barre supérieure 58, en étant serré entre un épaulement 76 de ce tronçon 64 et un écrou 78 vissé sur l'extrémité libre filetée du tronçon 64.

Le fonctionnement du dispositif anti-dévers 10A illustré sur les figures 3 à 6 est très simple.

Lorsque l'amplitude du dévers au droit de l'essieu est faible, les manchons ajourés 70 en élastomère présentent une flexibilité très importante (une raideur très faible), si bien que seule la raideur de la barre inférieure 50 est sollicitée pour s'opposer aux effets de dévers subis par l'essieu.

Lorsque l'amplitude du dévers augmente, les manchons en élastomère 70 se compriment et viennent alors ajouter progressivement à la raideur de la barre inférieure 50 la raideur de la seconde barre 58 pour s'opposer de façon croissante aux effets de dévers.

Lorsque l'amplitude du dévers continue d'augmenter, les moyens de raideur progressive 60 atteignent leur seuil de déformation élastique maximale, et la raideur totale pour s'opposer aux effets de dévers subis par l'essieu correspond alors à la somme des raideurs des deux barres.

L'invention ne se limite pas aux modes de réalisation décrits ci-dessus.

En particulier, l'invention peut s'appliquer également à des essieux arrière de véhicule automobile.

L'invention comporte de nombreux avantages.

La raideur du dispositif anti-dévers selon l'invention varie sensiblement par paliers successifs correspondant aux sollicitations successives des barres de torsion, lorsque l'amplitude du dévers augmente.

Les différents paliers de raideur peuvent être adaptés aux différentes plages d'amplitudes en ajustant la course morte ou la flexibilité des moyens élastiques de raideur progressive.

Le réglage de la raideur du dispositif anti-dévers selon l'invention peut également être effectué en sélectionnant des barres de diamètres adaptés en fonction des plages d'amplitudes dans lesquelles leur raideur est sollicitée.

L'invention permet d'obtenir avec des moyens mécaniques relativement simples un dispositif anti-dévers aussi efficace que les dispositifs anti-dévers hydrauliques classiques qui comportent généralement des moyens relativement complexes, difficiles à entretenir.

## Revendications

1. Dispositif anti-dévers pour essieu de véhicule automobile, du type comportant : une barre de torsion transversale (14;50) portée par le corps du véhicule, chaque extrémité de cette barre étant reliée à un organe mobile de suspension (12) d'une roue correspondante de l'essieu; et une barre de torsion transversale supplémentaire (20;58) portée par le corps du véhicule, caractérisé en ce que chaque extrémité de cette barre supplémentaire est reliée à l'organe mobile de suspension (12) correspondant par l'intermédiaire de moyens d'articulation (32;60) présentant une raideur qui croît progressivement avec l'amplitude du dévers du corps du véhicule, au moins à partir d'un seuil prédéterminé d'amplitude de ces dévers.

2. Dispositif selon la revendication 1, caractérisé en ce que chaque barre (14,20;50,58) est portée par deux paliers élastiques (24) comportant chacun une armature métallique (26) portée par le corps du véhicule, commune avec un palier élastique (24) de l'autre barre, les deux barres étant disposées sensiblement l'une au dessus de l'autre.

3. Dispositif selon la revendication 1 ou 2, caractérisé en ce que les extrémités (14E,20E) des barres (14,20) sont reliées à l'organe de suspension (12) par des biellettes verticales (18,22), chaque biellette (22) associée à la barre supplémentaire (20) étant reliée à l'organe de suspension (12) correspondant par l'intermédiaire des moyens (32) de raideur progressive.

4. Dispositif selon la revendication 3, caractérisé en ce que les moyens (32) de raideur progressive comprennent deux butées axiales mobiles (44,46) portées par la biellette (22) correspondante et une butée axiale fixe élastique (38) portée par l'organe de suspension (12) correspondant, formant un palier de coulissement de la biellette (22), interposée entre les butées mobiles (44,46) de manière qu'il existe un jeu entre chaque butée mobile (44,46) et la butée fixe (38) permettant une course morte axiale d'oscillation des butées mobiles (44,46) de part et d'autre de la butée fixe (38).

5. Dispositif selon la revendication 4, caractérisé en ce que la butée fixe est délimitée par un organe élastique (38) de forme générale annulaire, maintenu sur le bord d'un orifice (42) traversé par la biellette (22), ménagé dans une patte (16) solidaire de l'organe de suspension (12), et en ce que les butées mobiles sont délimitées par des coupelles (44,46) solidaires de la biellette (22).

6. Dispositif selon l'une quelconque des revendications 2 à 5, caractérisé en ce que les deux barres (14,20) sont pliées de manière que leurs extrémités (14E,20E) s'étendent de façon générale dans une direction sensiblement longitudinale du véhicule.

7. Dispositif selon la revendication 1 ou 2, caractérisé en ce que les extrémités (50E) d'une première barre (50) sont reliées à l'organe de suspension (12) par des biellettes verticales (52), les extrémités (58E) de la barre supplémentaire ou seconde barre (58) étant reliées aux extrémités (50E) de la première barre par l'intermédiaire des moyens (60) de raideur progressive.

8. Dispositif selon la revendication 7, caractérisé en ce que les moyens (60) de raideur progressive comprennent une armature métallique (66) comportant deux bagues (68) solidaires l'une de l'autre, entourant chacune l'une des deux barres (50,58), un manchon (70) en élastomère, ajouré par des alvéoles axiaux (72), étant interposé entre chaque bague (68) et la barre (50,58) correspondante.

9. Dispositif selon la revendication 8, caractérisé en ce que les bagues (68) ont une forme générale cylindrique et sont soudées entre elles le long de génératrices en contact entre elles, de manière que leurs axes soient sensiblement parallèles.

10. Dispositif selon la revendication 8 ou 9, caractérisé en ce que les barres sont pliées de manière que leurs extrémités (50E,58E) s'étendent de façon générale dans une direction sensiblement longitudinale du véhicule, et en ce que ces extrémités (50E,58E) sont par ailleurs coudées de manière à délimiter chacune un tronçon (62,64) sensiblement transversal, les bagues (68) entourant ces tronçons (62,64).

11. Dispositif selon la revendication 10, caractérisé en ce que le manchon en élastomère (70) entouré par l'une des bagues (68) est adhérisé sur une douille axiale centrale (74) de fixation des moyens de raideur progressive (60) sur la seconde barre (58), cette douille (74) étant enfilée et fixée sur le tronçon transversal (64) délimitant la partie terminale de l'extrémité (58E) de la seconde barre (58), en étant serrée entre un épaulement (76) de ce tronçon (64) et un écrou (78) vissé sur l'extrémité libre filetée du tronçon (64).

## Patentansprüche

1. Stabilisator für eine Kraftfahrzeugachse, bestehend aus: einem querliegenden Drehstab (14; 50), der von dem Fahrzeugkörper getragen wird, wobei jedes Ende dieses Stabes mit einem beweglichen Aufhängungselement (12) eines entsprechenden Rades der Achse verbunden ist; einem zusätzlichen querliegenden Drehstab (20; 58), der von dem Fahrzeugkörper getragen wird, dadurch gekennzeichnet, daß jedes Ende dieses zusätzlichen Stabes mit dem entsprechenden beweglichen Aufhängungselement (12) mit Hilfe von Gelenkmitteln (32; 60) verbunden ist, die eine Steifigkeit aufweisen, die progressiv mit der Amplitude der Schräglage des Fahrzeugkörpers steigt, zumindest ausgehend von einer bestimmten Schwelle der Amplitude dieser Neigung.

2. Vorrichtung nach Anspruch 1, dadurch gekennzeichnet, daß jeder Stab (14, 20; 50, 58) von zwei elastischen Lagern (24) getragen wird, die jeweils einen metallischen Beschlag (26) umfassen, der von dem Körper des Fahrzeugs getragen wird und mit einem elastischen Lager (24) des anderen Stabes gemein ist, wobei die beiden Stäbe im wesentlichen übereinander angeordnet sind.

3. Vorrichtung nach Anspruch 1 oder 2, dadurch gekennzeichnet, daß die Enden (14E, 20E) der Stäbe (14, 20) mit dem Aufhängungselement (12) durch vertikale Schwingarme (18, 22) verbunden sind, wobei jeder mit dem zusätzlichen Stab (20) verbundene Schwingarm (22) mit dem entsprechenden Aufhängungselement (12) durch Mittel (32) mit progressiver Steifigkeit verbunden ist.

4. Vorrichtung nach Anspruch 3, dadurch gekennzeichnet, daß die Mittel (32) mit progressiver Steifigkeit zwei bewegliche Axialanschläge (44, 46), die von dem entsprechenden Schwingarm (22) getragen werden, und einen festen elastischen Anschlag (38) umfassen, der von dem entsprechenden Aufhängungselement (12) getragen wird, das ein Gleitlager für den Schwingarm (22) bildet, der zwischen den beweglichen Anschlägen (44, 46) derart angeordnet ist, daß ein Spiel zwischen federn beweglichen Anschlag (44, 46) und dem festen Anschlag (38) besteht, das einen axialen freien Hub der beweglichen Anschläge (44, 46) beiderseits des festen Anschlages (38) ermöglicht.

5. Vorrichtung nach Anspruch 4, dadurch gekennzeichnet, daß der feste Anschlag von einem elastischen Element (38) allgemeiner Ringform begrenzt wird, das am Rand einer Öffnung (42) gehalten wird, durch die der Schwingarm (22) hindurchgeht, der in einem mit dem Aufhangungselement (12) verbundenen Befestigungseisen (16) vorgesehen ist, und die beweglichen Anschläge von mit dem Schwingarm (22) verbundenen Schalen (44, 46) begrenzt werden.

6. Vorrichtung nach einem der Ansprüche 2 bis 5, dadurch gekennzeichnet, daß die beiden Stäbe (14, 20) derart umgebogen sind, daß sich ihre Enden (14E, 20E) ganz allgemein im wesentlichen in Längsrichtung des Fahrzeugs erstrecken.

7. Vorrichtung nach Anspruch 1 oder 2, dadurch gekennzeichnet, daß die Enden (50E) eines ersten Stabes (50) mit dem Aufhängungselement (12) durch vertikale Schwingarme (52) verbunden sind, wobei die Enden (58E) des zusätzlichen Stabes oder zweiten Stabes (58) mit den Enden (50E) des ersten Stabes durch Mittel (60) mit progressiver Steifigkeit verbunden sind.

8. Vorrichtung nach Anspruch 7, dadurch gekennzeichnet, daß die Mittel (60) mit progressiver Steifigkeit einen metallischen Beschlag (66) umfassen, der zwei miteinander verbundene Ringe (68) umfaßt, die jeweils einen der beiden Stäbe (50, 58) umgeben, wobei eine Elastomerhülse (70), die durch axiale Zellen (72) unterbrochen ist, zwischen jedem Ring (68) und dem entsprechenden Stab (50, 58) angeordnet ist.

9. Vorrichtung nach Anspruch 8, dadurch gekennzeichnet, daß die Ringe (68) eine allgemeine zylindrische Form aufweisen und miteinander entlang von miteinander in Berührung stehenden Mantellinien verschweißt sind, so daß ihre Achsen im wesentlichen parallel sind.

10. Vorrichtung nach Anspruch 8 oder 9, dadurch gekennzeichnet, daß die Stäbe derart gebogen sind, daß sich ihre Enden (50E, 58E) ganz allgemein im wesentlichen in Längsrichtung des Fahrzeugs erstrecken, und daß diese Enden (50E, 58E) überdies derart gekrümmt sind, daß sie jeweils einen im wesentlichen querliegenden Abschnitt (62, 64) begrenzen, wobei die Ringe (68) diese Abschnitte (62, 64) umgeben.

11. Vorrichtung nach Anspruch 10, dadurch gekennzeichnet, daß die Elastomerhülse (70), die von einem der beiden Ringe (68) umgeben ist, auf einer axialen zentralen Befestigungsbuchse (74) für die Mittel mit progressiver Steifigkeit (60) auf dem zweiten Stab (58) verbunden sind, wobei diese Buchse (74) auf dem querliegenden Abschnitt (64) aufgeschoben und befestigt ist, der den Endteil des Endes (58E) des zweiten Stabes (58) begrenzt, indem er zwischen einem Absatz (76) dieses Abschnittes (64) und einer auf das freie Gewindeende des Abschnittes (64) aufgeschraubten Mutter (78) festgeklemmt wird.

## Claims

1. Anti-roll device for axles of motor vehicles of the type comprising: a transverse torsion bar (14;50) carried by the vehicle body, each end of this bar being connected to a moving suspension component (12) of a corresponding wheel on the axle; and a supplementary transverse torsion bar (20; 58) carried by the vehicle body, characterised in that each end of this supplementary bar is connected to a corresponding moving component of the suspension (12) through the intermediary of articulation means (32; 60) having a stiffness which increases progressively with the amplitude of the roll of the vehicle body, at least starting from a predetermined threshold of the amplitude of this roll.

2. Device according to Claim 1, characterised in that each bar (14,20; 50, 58) is carried by two elastic mountings (24) each comprising a metallic bracket (26) carried by the body of the vehicle, common with an elastic mounting (24) of the other bar, the two bars being arranged substantially one above the other.

3. Device according to Claim 1 or 2, characterised in that the ends (14E,20E) of the bars (14,20) are connected to the suspension component (12) by vertical links (18,22,) each link (22) associated with the supplementary bar (20) being connected to the corresponding suspension component (12) through the intermediary of means (32) of progressive stiffness.

4. Device according to claim 3, characterised in that the progressive stiffness means (32) comprise two axially movable abutments (44,46) carried by the corresponding link (22) and an axially fixed elastic abutment (38) carried by the corresponding suspension component (12), forming a sliding mounting for the link (22) interposed between the movable abutments (44,46) in such a way that a degree of play is present between each movable abutment (44,46) and the fixed abutment (38) allowing a dead travel for axial oscillation of the movable abutments (44,46) with respect to the fixed abutment (38).

5. Device according to claim 4, characterised in that the fixed abutment is defined by an elastic member (38) of generally annular shape held at the edge of an opening (42) through which the link (22) passes, provided on a lug (16) fixed to the suspension component (12), and in that the movable abutments are defined by cups (44,46) fixed to the link (22).

6. Device according to any one of claims 2 to 5, characterised in that the two bars (14,20) are bent in such a way that their ends (14E,20E) extend in a general manner in a direction substantially longitudinal with respect to the vehicle.

7. Device according to claim 1 or 2 characterised in that the ends (50E) of a first bar (50) are connected to the suspension component (12) by vertical links (52), the ends (58E) of the supplementary bar or second bar (58) being connected to the ends (50E) of the first bar through the intermediary of means (60) of progressive stiffness.

8. Device according to claim 7, characterised in that the means (60) of progressive stiffness comprise a metallic mounting (66) having two rings (68) connected one to the other, each surrounding one of the two bars (50,58), an elastomeric sleeve (70) perforated by axial holes (72) being interposed between each ring (68) and the corresponding bar (50,58).

9. Device according to claim 8, characterised in that the rings (68) have a generally cylindrical shape and are welded together along generatrices in contact between them in such a way that their axes are substantially parallel.

10. Device according to claim 8 or 9, characterised in that the bars are bent in such a way that their ends (50E, 58E) extend in a general manner in a direction substantially along the length of the vehicle and in that these ends (50E, 58E) are furthermore bent in a manner such as to define on each of them a substantially transverse stub (62,64), the rings (68) enclosing these stubs (62,64).

11. Device according to claim 10, characterised in that the elastomeric sleeve (70) enclosed by one of the rings (68) is bonded to a central axial pin (74) for securing means of progressive stiffness (60) on the second bar (58), this pin (74) being fitted and secured on the transverse stub (64) defining the terminal portion of the end (58E) of the second bar (58), being clamped between a shoulder (76) on this stub (64) and a nut (78) screwed onto the free threaded end of the stub (64).
